# EUROPÄISCHE PATENTSCHRIFT

(11) **EP 1 848 898 B1**
(45) Veröffentlichungstag und Bekanntmachung des Hinweises auf die Patenterteilung: **16.04.2008**
(21) Anmeldenummer: 05783473.1
(22) Anmeldetag: 27.08.2005
(51) Int. Cl.: F16D 65/14, F16D 55/00

(54) **ELEKTROMAGNETISCHE BREMSE MIT EINEM PERMANENTMAGNETEN**
ELECTROMAGNETIC PERMANENT MAGNET BRAKE
FREIN ELECTROMAGNETIQUE COMPORTANT UN AIMANT PERMANENT

(30) Priorität: 15.02.2005 DE 102005006699
(43) Veröffentlichungstag der Anmeldung: 31.10.2007
(73) Patentinhaber: KENDRION Binder Magnete GmbH, 78048 Villingen-Schwenningen (DE)
(72) Erfinder: BERNDT, Jürgen, 78056 Villingen-Schwennigen (DE); MESSNER, Erwin, 78073 Bad Dürrheim (DE); BÖTTCHER, Dirk, 78126 Neuhausen (DE)
(74) Vertreter: Maucher, Wolfgang
(86) Internationale Anmeldenummer: PCT/EP2005/009256
(87) Internationale Veröffentlichungsnummer: WO 2006/087017

(56) Entgegenhaltungen:
- EP-A- 0 693 633
- DE-U1-2202004 001 04
- FR-A- 2 721 080
- US-A- 5 121 018

## Beschreibung

Die Erfindung betrifft eine elektromagnetische Bremse für einen insbesondere elektrischen Antrieb, mit wenigstens einem Bremsenkörper, der wenigstens einen Permanentmagneten, wenigstens einen Elektromagneten mit einer elektromagnetischen Erregerspule, einen als Außenring ausgebildeten Außenpol und einen als Innenring ausgebildeten Innenpol aufweist, wobei der Bremsenkörper drehfest insbesondere mit dem Ständer eines vorzugsweise elektrischen Antriebs - direkt oder indirekt - verbunden ist, sowie mit einer Ankerscheibe, die mit der drehbaren Welle des Antriebs - direkt oder indirekt - drehfest verbunden ist, wobei die Ankerscheibe mit dem Außenpol und mit dem Innenpol sowie mit dem Permanentmagneten über einen Luftspalt einen magnetischen Kreis bildet und wobei die Ankerscheibe durch die Magnetkraft des Permanentmagneten gegen die Kraft einer Feder an den Bremsenkörper anziehbar ist und der Elektromagnet bei bestromter Erregerspule das Permanentmagnetfeld des Permanentmagneten zumindest soweit kompensiert, neutralisiert, verdrängt oder umlenkt, dass die Ankerscheibe mittels Federkraft von dem Bremskörper abhebbar oder abgehoben ist.

Derartige elektromagnetische Bremsen sind vielfach bekannt, z.B. aus DE 20 2004 00 1042, und werden vor allem für elektrische Antriebe verwendet, wo sie als Haltebremsen in Servomotoren gedacht sein können. Die elektromagnetische Bremse muss im Stande sein, den Antrieb im elektrisch spannungsfreien Zustand spielbehaftet oder spielfrei und restmomentfrei festzuhalten, sowie den Antrieb im Notfall aus einer gewissen Drehzahl bei einem gewissen Trägheitsmoment abzubremsen. Mit Hilfe einer derartigen elektromagnetischen Bremse, die auch als Permanentmagnetbremse bezeichnet wird, soll ein Bremsmoment erzeugt werden können, das während der Lebensdauer der Bremse so wenig wie möglich schwankt.

Dazu ist es bisher bekannt, einen ringscheibenförmigen, axial wirkenden Permanentmagneten vorzusehen, dessen Magnetfeld im Bereich des Innenpols und des Außenpols senkrecht in Richtung der Ankerscheibe austritt beziehungsweise eintritt. Dadurch entstehen normale magnetische Anziehungskräfte im Bereich des Innenpols und des Außenpols auf die Ankerscheibe. Über einen in der Erregerspule fließenden Strom wirkt der Elektromagnet auf den magnetischen Kreis aus Bremskörper und Ankerscheibe ein. In stromlosem Zustand der elektrischen Erregerspule ist kein Luftspalt vorhanden. Wird Strom eingespeist, wird das Feld des Permanentmagneten im Bereich der Pole und des Ankers durch den Elektromagneten aufgehoben und die zum Beispiel als Blattfeder ausgebildete Rückstellfeder zieht die Ankerscheibe von den Polen weg.

Derartige Permanentmagnetbremsen haben einen grundsätzlichen Nachteil, dass nämlich nach dem Öffnen der Bremse bei weiterer Erhöhung des Stroms in der Erregerspule über einen bestimmten Wert hinaus ("Wiederanzugsstrom") der Elektromagnet das Feld des Permanentmagneten in den Polen deutlich überkompensiert und es zu einem unerwünschten Wiederanzug der Ankerscheibe an den Bremsenkörper kommt. Der hieraus resultierende Bereich des Erregerstroms, in welchem die Bremse geöffnet wird beziehungsweise geöffnet bleibt ("Lüftfenster") sollte möglichst groß sein, damit die Bremse in einem weiten Toleranzbereich von Erregerspannung und Umgebungstemperatur sicher eingesetzt werden kann.

Aufgrund der Einbausituation soll dabei die elektromagnetische Bremse mit ihrem Querschnitt den Querschnitt des Antriebs nicht übertreffen, sondern gegebenenfalls soll die Bremse sogar in das Motorgehäuse integrierbar sein. Dadurch und durch die scheibenförmige Ausbildung des Permanentmagneten ist das Bremsmoment begrenzt, denn zur Vergrößerung müsste die radiale Ausdehnung des ringscheibenförmigen Permanentmagneten vergrößert werden, was in aller Regel durch den zur Verfügung stehenden Einbauraum nicht möglich ist.

Es besteht deshalb die Aufgabe, eine elektromagnetische Bremse der eingangs genannten Art zu schaffen, die praktisch ohne Vergrößerung ihres Querschnitts oder Durchmessers oder gegebenenfalls sogar bei verkleinertem Durchmesser oder Querschnitt ein höheres Drehmoment oder Bremsmoment möglichst über die gesamte Lebensdauer der Bremse ergibt, wobei ein möglichst großes Lüftfenster des Erregerstroms ermöglicht werden soll.

Zur Lösung dieser scheinbar widersprüchlichen Aufgabe ist die eingangs definierte elektromagnetische Bremse dadurch gekennzeichnet, dass die radiale Querschnittsabmessung des die Bremskraft erzeugenden Permanentmagneten zwischen seinem Innendurchmesser und seinem Außendurchmesser kleiner als seine axiale Abmessung ist und dass die räumliche Anordnung des Permanentmagneten in axialer Richtung zwischen der Ankerscheibe und der Erregerspule vorgesehen ist.

Auf diese Weise ergibt sich ein Permanentmagnet, dessen radialer Ringquerschnitt kleiner als seine axiale Ausdehnung ist, die demgemäß zur Erhöhung der Magnetkraft praktisch beliebig vergrößert werden kann, dass heißt die Ausdehnung des Permanentmagneten kann in axialer Richtung gesteigert werden, ohne die Querschnitts- oder Durchmesserabmessung der Bremse zu vergrößern. Allenfalls ergibt sich eine axiale Verlängerung der Bremse, was jedoch auch vermieden werden kann, wenn der Permanentmagnet platzsparend zwischen Innenpol und Außenpol angeordnet wird. Praktisch kann unter engster Ausnutzung eines geometrisch vorbestimmten Außenabmessers oder Außendurchmessers ein deutlich erhöhtes Drehmoment gegenüber einer bekannten elektromagnetischen Bremse mit einem ringscheibenförmigen Permanentmagneten erreicht werden. Besonders vorteilhaft und zweckmäßig ist dabei die räumliche Anordnung des Permanentmagneten in axialer Richtung zwischen der Ankerscheibe und der Erregerspule, weil dadurch der Magnetfluss auf kürzest möglichem Weg über die Pole durch den Anker verlaufen kann und somit gegenüber dem Feld des Elektromagneten begünstigt wird. Dies führt zu einem höheren Wiederanzugsstrom der Erregerspule und zu einem großen Lüftfenster des Erregerstromes, wodurch auch eine Verbesserung im Temperaturverhalten der Bremse ermöglicht wird.

Der Permanentmagnet kann hülsenförmig oder manschettenförmig ausgebildet sein.

Weiterhin ist es zweckmäßig, wenn der Permanentmagnet im radial äußeren Bereich der Erregerspule oder ihres Gehäuses angeordnet ist. Je größer der Radius des Permanentmagneten ist, umso größer ist dann auch dieser Permanentmagnet selbst. Besonders vorteilhaft ist dabei, dass durch diese Anordnung des Permanentmagneten im äußeren Umfangsbereich der Erregerspule oder des Gehäuses der Erregerspule auch die durch den Außenring und durch den Innenring gebildeten Pole in einem entsprechend großen radialen Abstand zur Mittelachse der Bremse zu liegen kommen und dadurch einen größtmöglichen Reibradius haben, also ein entsprechend großes Drehmoment als Bremsmoment erzeugen können. Dabei hat der erfindungsgemäße geringe Abstand der beiden Pole den Vorteil, dass die eventuell durch unterschiedlich starke Wirkung der einzelnen Pole und ihrer Traganteile auftretenden Bremsmoment- oder Drehmomentschwankungen möglichst gering sind. Diese besonderen Vorteile werden dabei durch die erfindungsgemäße Anordnung des insbesondere hülsenförmigen oder manschettenförmigen Permanentmagneten in axialer Richtung zwischen der Ankerscheibe und der Erregerspule begünstigt.

Der Permanentmagnet kann hülsenförmig zwischen Außenring und Innenring des Bremskörpers angeordnet und radial magnetisiert sein und der Außenpol sowie der Innenpol können insbesondere in einer Ebene angeordnet sein. Diese radiale Anordnung des Permanentmagneten und die axial gleichhohe Anordnung des Innenrings und des Außenrings ergeben aufgrund einer erhöhten oder vergrößerten Magnetfläche und einem von Beginn an gleichmäßigen Tragen beider Pole ein deutlich erhöhtes, beispielsweise doppeltes Drehmoment. Da über beide Pole eine gleichmäßige und vollständige Reibfläche zur Verfügung steht, erlaubt die erfindungsgemäße Bremse über ihre Lebensdauer ein weitgehend konstantes Drehmoment.

Der lichte Abstand der beiden in radialer Richtung beidseits des Permanentmagneten befindlichen, durch den Außenring und den Innenring gebildeten Pole kann wenigstens der radialen Querschnittsdicke des Permanentmagneten entsprechend. Dadurch wird die Momenten- und Leistungsdichte bestmöglich optimiert, weil dieser Abstand zwischen den beiden Polen relativ klein ist, also die beiden wirksamen Pole sehr nah beieinander liegen können. Auch kann dadurch die Wirksamkeit des Permanentmagneten entsprechend gut ausgenutzt werden. Die enge Anordnung der beiden Pole und des Permanentmagneten erhöhen die magnetische Anziehungskraft für die Ankerscheibe und somit auch das Bremsmoment.

Dabei kann es zweckmäßig sein, wenn dieser Mindestabstand der Pole gegenüber der radialen Dicke des Permanentmagneten vergrößert ist, so dass sich zwischen der Stirnseite des Permanentmagneten und in diesem vergrößerten Abstand der beiden Pole zueinander ein Freiraum ergibt. Dieser Freiraum kann entsprechend den Anforderungen an den magnetischen Fluss optimiert sein und hat den zusätzlichen Vorteil, eventuell anfallenden Abrieb aufnehmen zu können.

Eine abgewandelte Ausführungsform kann vorsehen, dass der Abstand der Pole durch nichtmagnetischen Werkstoff verschlossen oder ausgefüllt ist. Dadurch kann verhindert werden, dass eventueller Abrieb innerhalb des Bremssystems verbleibt.

Die axiale Abmessung des Permanentmagneten kann seine radiale Querschnittsdicke, also die Differenz zwischen seinem Innendurchmesser und seinem Außendurchmesser, mehrfach übertreffen. Es kann also eine "Permanentmagnet-Hülse" relativ großer axialer Abmessung vorgesehen werden, die gleichzeitig in radialer Richtung zwischen Außenring und Innenring beziehungsweise Außenpol und Innenpol wenig Platz benötigt, so dass Außenring und Innenring entsprechend große Polflächen bilden können, ohne eine größere radiale Abmessung der Bremse zu bewirken.

Zur Erzeugung der auf die Ankerscheibe wirkenden Federkraft können wenigstens eine Zugfeder, eine Druckfeder und/oder eine vorgespannte und vernietete oder verschraubte Segmentfeder zur Erzeugung der axialen Rückstellkraft auf die Ankerscheibe, insbesondere mehrere am Umfang der konzentrisch zur Welle angeordneten Ankerscheibe angeordnete Zugfedern oder Segmentfedern vorgesehen sein, die in einem der Ankerscheibe in axialer Richtung bezüglich ihrer axialen Verstellbarkeit begrenzenden Flansch angeordnet ist/sind, der auf der dem Permanentmagneten abgewandten Seite der Ankerscheibe gegenüber der Welle radial hochsteht. Der Flansch bildet also gleichzeitig den Anschlag für die Ankerscheibe, wenn diese durch die Rückstellfedern von der Bremsfläche beziehungsweise von dem Innenpol und dem Außenpol zurückgezogen ist, weil der Elektromagnet bestromt ist.

Dabei kann der die Zugfedern oder als solche wirkenden Segmentfedern enthaltende Flansch mit einer mit der Welle des Antriebs drehfest verbundenen Hülse verbunden, insbesondere einstückig verbunden sein und die Ankerscheibe kann auf der Außenseite dieser Hülse drehfest, aber axial um den Luftspalt verstellbar angeordnet sein.

Der hülsen- oder manschettenförmige Permanentmagnet kann zwischen Außenring und Innenring dadurch fixiert sein, dass der Außenring unter Zwischenlage des Permanentmagneten mit dem Innenring durch Schrumpfen verbunden ist. Die erfindungsgemäße radiale Anordnung des Permanentmagneten zwischen Innenring oder Bremsinnenkörper und Außenring oder Bremsaußenkörper und auch der Ankerscheibe kann also dadurch fixiert und realisiert werden, dass der kalte Innenring mit dem noch unmagnetischen radial wirkenden Dauermagneten vormoniert und dann in den auf beispielsweise 200 Grad Celsius erwärmten Außenring gesteckt beziehungsweise dieser Außenring über den Permanentmagneten geschoben wird. Nach Abkühlung des Außenrings sind dann dieser, der Permanentmagnet und der Innenring fest miteinander verbunden, wobei gleichzeitig ein geringster Luftspalt zwischen Außenring und Innenring sowie Permanentmagnet sichergestellt werden kann. Es entsteht eine kostengünstige, dauerfeste Verbindung.

Dabei ist es möglich, dass der Permanentmagnet aus einzelnen in Umfangsrichtung nebeneinander angeordneten Segmenten besteht. Dies gilt vor allem dann, wenn die Befestigung durch Schrumpfen erfolgt, so dass die einzelnen Segmente dadurch ihre genauere Lage relativ zueinander nicht mehr verlieren können.

Eine Abwandlung der erfindungsgemäßen Bremse kann vorsehen, dass der Bremsenkörper einen Bremsbelag aufweist. Dadurch kann die Bremse auch als sogenannte Arbeitsbremse eingesetzt werden.

Vor allem bei Kombination einzelner oder mehrer der vorbeschriebenen Merkmale und Maßnahmen ergibt sich eine elektromagnetische Bremse, bei welcher die Reibkraft im Bereich des Innenpols und des Außenpols gleichmäßig verteilt wird, so dass das erzielbare Drehmoment beziehungsweise die erzielbare Bremskraft von Anfang an die angestrebte Größe haben kann, was durch den radial angeordneten oder hülsenförmigen Permanentmagneten je nach dessen axialer Abmessung verstärkt oder erheblich verstärkt werden kann.

Dabei erlaubt diese radiale oder hülsenförmige Anordnung und Ausbildung des Permanentmagneten eine geänderte und verbesserte Schnittstelle beispielsweise zum Motorlagerschild, an welchem die Bremse verspannungsfrei angeschraubt werden kann. Aufgrund der höheren Magnetkraft des hülsenförmig ausgebildeten Permanentmagneten, der in axialer Richtung entsprechend vergrößert sein kann, wird zwar eine höhere elektrische Leistung an der Erregerspule des oder der Elektromagneten benötigt, jedoch hat sich gezeigt, dass diese elektrische Leistung der Spule relativ zum Anstieg des Dreh- oder Bremsmoments gegenüber konventionellen Lösungen sinkt. In vorteilhafter Weise ist es möglich, mit der erfindungsgemäßen Bremse bei gegenüber bekannten Bremsen gleichen Drehmoments die Baugröße zu vermindern oder bei gleichbleibende Baugröße eine höhere Bremskraft zu erzielen, so dass die erfindungsgemäße Bremse auch einen erheblichen wirtschaftlichen Vorteil hat.

Eine weitere besonders zweckmäßige Ausgestaltung der Erfindung kann vorsehen, dass auf der dem ersten Permanentmagneten und der Ankerscheibe in axialer Richtung abgewandten Seite der Erregerspule ein zweiter Permanentmagnet zwischen Außenring und Innenring angeordnet ist, dessen radiale Querschnittsabmessung oder Querschnittsdicke insbesondere kleiner als seine axiale Abmessung ist, und dass an dem der Erregerspule abgewandten stirnseitigen Ende dieses zweiten Permanentmagneten eine zweite Ankerscheibe vorgesehen ist, die auf die selbe Welle wie die erste Ankerscheibe wirkt.

Es ergibt sich durch diese Merkmale also eine Doppelbremse, bei welcher auf beiden Seiten der Erregerspule Permanentmagnete und Ankerscheiben angeordnet sind, wobei auch auf der zweiten Seite der Permanentmagnet zwischen Erregerspule und Ankerscheibe angeordnet ist. Bei einer derartige Doppelbremse braucht nur eine einzige Erregerspule vorhanden zu sein. Auch dabei sind die Magnete in radialer Richtung magnetisiert, aber auf den beiden entgegengesetzten Seiten der Erregerspule jeweils in umgekehrter Richtung. Eine derartige Anordnung ergibt ein weiter vergrößertes Bremsmoment bei zwar etwas vergrößertem Kupfervolumen aber nur einem einzigen elektrischen Anschluss. Im Vergleich zur Verwendung von zwei Bremsen, die auf einer gemeinsamen Welle arbeiten, ergibt sich eine Einsparung an Bauteilen und Baulänge. Insbesondere bei Gleichheit beider Seiten oder Hälften ergibt sich eine Bremse für Anwendungen mit erhöhten Sicherheitsanforderungen, zum Beispiel für Personen- und Lastenaufzüge, da beide Seiten voneinander unabhängige und damit redundante Bremssysteme darstellen. Das Lüften der Bremse ist hingegen nur einfach vorhanden, was aber ausreicht, da beim Ausfall der Erregung der Erregerspule der sichere Bremszustand - redundant - erhalten bleibt.

Eine konstruktiv zweckmäßige Anordnung ergibt sich, wenn der Außenring die Erregerspule nach zwei einander entgegengesetzten Seiten in axialer Richtung überragt und den ersten Permanentmagneten und den zweiten Permanentmagneten außenseitig umschließt und wenn die Innenseite des zweiten Permanentmagneten an einem zweiten Innenring anliegt, so dass der Außenpol des zweiten Permanentmagneten von dem in axialer Richtung verlängerten Außenring und der Innenpol von dem zweiten Innenring gebildet sind. Somit sind beide Seiten dieser Doppelbremse etwa gleich ausgebildet.

Dabei kann der zweite Permanentmagnet den selben Durchmesser und die selbe Querschnittsdicke wie der erste Permanentmagnet haben und mit dem ersten Permanentmagneten fluchten. Somit ergeben sich an beiden Seiten dieser Doppelbremse übereinstimmende Durchmesserverhältnisse.

Auch die axiale Abmessung des zweiten Permanentmagneten kann der des ersten Permanentmagneten entsprechen. Dadurch wird für beide Hälften dieser Doppelbremse eine praktisch übereinstimmende Abmessung und Ausbildung und damit auch eine im wesentlichen übereinstimmende Bremskraft erzielt.

In zweckmäßiger Weise können beide Permanentmagnete sowie ihre Befestigungen und die mit ihnen zusammenwirkenden Teile, insbesondere die Ankerscheiben und/oder die Federn spiegelsymmetrisch zu dem gemeinsamen Elektromagneten oder seiner Erregerspule angeordnet und im übrigen übereinstimmend ausgebildet sein. Daraus ergibt sich, dass auch bei dieser Doppelbremse für deren beide Hälften die schon vorstehend für eine einfache Bremse beschriebenen Merkmale und Maßnahmen gelten beziehungsweise vorhanden sein können.

Nachstehend ist ein Ausführungsbeispiel der Erfindung anhand der Zeichnung näher beschrieben. Es zeigt in zum Teil schematisierter Darstellung:

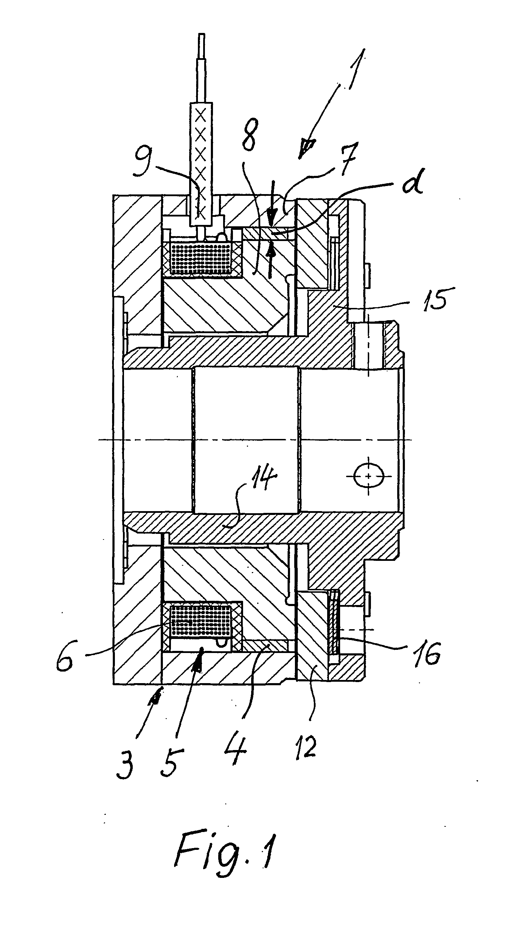

- Fig. 1: einen Längsschnitt einer erfindungsgemäßen elektromagnetischen Bremse mit einem als Außenring ausgebildeten Außenpol und einem als Innenring ausgebildeten Innenpol, zwischen denen ein hülsenförmiger Permanentmagnet angeordnet ist, dessen radiale Querschnittsdicke erheblich geringer als die axiale Abmessung ist, wobei dieser hülsenförmige Permanentmagnet in axialer Richtung gesehen zwischen der Ankerscheibe und der Erregerspule der Bremse angeordnet ist, sowie

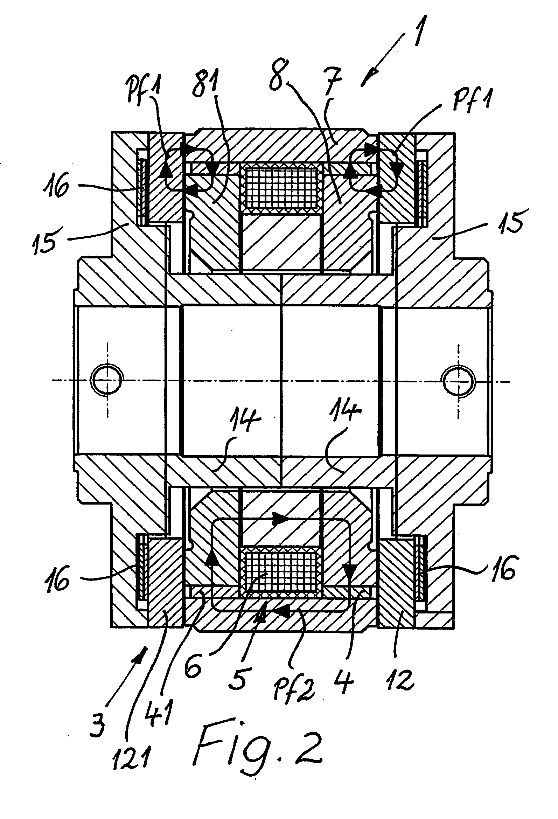

- Fig. 2: einen Längsschnitt einer erfindungsgemäßen elektromagnetischen Bremse, bei welcher beidseits des Elektromagneten beziehungsweise der Erregerspule jeweils hülsenförmige Permanentmagnete und Ankerscheiben etwa spiegelsymmetrisch angeordnet sind, so dass eine auf eine gemeinsame Welle wirkende Doppelbremse gebildet ist.

Bei der nachfolgenden Beschreibung der beiden Ausführungsbeispiele erhalten in ihrer Funktion übereinstimmende Teile auch bei etwas abgewandelter Formgebung oder Gestaltung übereinstimmende Bezugszahlen.

Eine im Ganzen mit 1 bezeichnete elektromagnetische Bremse ist für einen nicht näher dargestellten elektrischen Antrieb gedacht und weist einen Bremsenkörper 3 auf, der einen Permanentmagneten 4, wenigstens einen Elektromagneten 5 mit einer elektromagnetischen Erregerspule 6, einen als Außenring 7 ausgebildeten Außenpol und einen als Innenring 8 ausgebildeten Innenpol umfasst. Dabei erkennt man in Fig. 1 die von oben her mit der Erregerspule 6 verbundene Litze beziehungsweise einen Stecker 9.

Der Bremsenkörper 3 ist in Gebrauchsstellung beispielsweise in bekannter Weise drehfest über den Lagerschild mit dem Ständer oder Gehäuse des elektrischen Antriebs verbunden.

Gemäß der Figur 1 gehört zu dieser elektrischen Bremse 1 eine Ankerscheibe 12, die mit der drehbaren Welle des Antriebs indirekt, nämlich über eine noch zu beschreibende Hülse 14 und einen an dieser angeordneten Flansch 15, drehfest verbunden ist, wobei die Ankerscheibe 12 mit dem Außenpol 7 und mit dem Innenpol 8 sowie mit dem Permanentmagneten 4 über einen in den Zeichnungen nicht erkennbaren Luftspalt einen magnetischen Kreis bildet und wobei die Ankerscheibe 12 durch die Magnetkraft des Permanentmagneten 4 gegen die Kraft von ebenfalls noch zu beschreibenden Federn 16 an den Bremsenkörper 3 beziehungsweise dessen Außenring 7 und Innenring 8 stirnseitig anziehbar ist. Ist die Erregerspule 6 des Elektromagneten 5 nicht bestromt, ist also die Bremskraft wirksam. Durch Bestromen der Erregerspule kann das Permanentmagnetfeld des Permanentmagneten 4 soweit kompensiert, neutralisiert, verdrängt oder umgelenkt werden, dass die Ankerscheibe 12 mittels Federkraft der Federn 16 von dem Bremskörper 3 beziehungsweise den Stirnflächen des Außenrings 7 und des Innenrings 8 abhebbar oder abgehoben ist. Fällt der Strom aus, wird also die Bremse 1 geschlossen.

Dabei ist vorgesehen, dass die radiale Querschnittsabmessung oder Querschnittsdicke d des Permanentmagneten 4, also die Abmessung zwischen seinem Innendurchmesser und seinem Außendurchmesser, kleiner als seine axiale Abmessung ist. Man erkennt in der Figur 1 deutlich, dass diese radiale Querschnittsabmessung oder Querschnittsdicke d relativ zu der axialen Länge des Permanentmagneten 4 gering ist, dass heißt der Permanentmagnet 4 kann in axialer Richtung vergrößert gewählt werden, ohne dass der Umfang oder Querschnitt oder Durchmesser der Bremse 1 größer wird, so dass also die Magnetkraft ohne eine derartige Querschnittsvergrößerung gesteigert werden kann. Dabei übertrifft die axiale Abmessung des Permanentmagneten 4 seine radiale Querschnittsdicke d mehrfach und zwar in dem Ausführungsbeispiel etwa um das Dreifache oder Vierfache, wobei aber auch eine geringere oder größere Relation dieser Abmessungen je nach gewünschter Magnetkraftstärke gewählt werden kann.

Der Permanentmagnet 4 ist also hülsenförmig zwischen Außenring 7 und Innenring 8 des Bremsenkörpers 3 angeordnet und dabei radial magnetisiert, um über den Außenring 7 und den Innenring 8 mit der Ankerscheibe 12 einen magnetischen Kreis zu bilden, wobei für die Unterbringung des Permanentmagneten 4 die räumliche Erstreckung von Innenring 7 und Außenring 8 dahingehend ausgenutzt werden kann, dass sich der Permanentmagnet 4 innerhalb des von diesen benötigten Platzes befinden kann.

Zur Erzeugung der auf die Ankerscheibe 12 wirkenden Federkraft sind blattfederförmige Segmentfedern 16 vorgespannt und mit dem Flansch 15 vernietet und am Umfang konzentrisch zur Welle beziehungsweise zur Ankerscheibe 12 vorgesehen, so dass der Flansch 15 eine zusätzliche Funktion hat, indem er diese Segmentfedern 16 aufnimmt. Außerdem begrenzt dieser Flansch 15 die axiale Bewegung der Ankerscheibe 12 von dem Bremsenkörper 3 weg und steht dazu auf der dem Permanentmagneten 4 abgewandten Seite der Ankerscheibe 12 gegenüber der Welle beziehungsweise der Hülse 14 radial hoch.

Dabei erkennt man in beiden Ausführungsbeispielen, dass der die Zugfedern 16 beziehungsweise die als solche wirkenden Segmentfedern enthaltende Flansch 15 mit der mit der Welle in Gebrauchsstellung drehfest verbundenen Hülse 14 einstückig verbunden ist und die Ankerscheibe 12 auf der Außenseite dieser Hülse 14 drehfest, aber axial um dem Luftspalt verstellbar angeordnet ist. Somit ergibt sich insgesamt eine kompakte Bremse 1, die vormontiert sein kann, um dann anschließend mit der Welle und dem Antrieb verbunden zu werden.

In der Figuren ist gut erkennbar, dass der hülsen- oder manschettenförmige Permanentmagnet 4 mit seiner inneren und seiner äußeren Oberfläche, die parallel zueinander verlaufen, jeweils den Innenring 8 und den Außenring 7 berührt und folglich zwischen Außenring 7 und Innenring 8 dadurch fixiert werden kann, dass der Außenring 7 unter Zwischenlage des Permanentmagneten 4 mit dem Innenring 8 durch Schrumpfen verbunden sein kann. Praktisch kann der Innenring 8 mit dem hülsenförmigen Permanentmagneten 4 versehen und danach der beispielsweise auf 200° C erwärmte Außenring 7 aufgesteckt oder der Innenring 8 mit dem Permanentmagneten 4 in diesen erwärmten Außenring 7 eingesteckt oder eingeschoben werden, wonach die drei Teile - wenn der Außenring 7 abgekühlt ist - fest miteinander verbunden sind und es keiner zusätzlichen Befestigungsmaßnahmen bedarf.

Dabei kann der Permanentmagnet 4 auch aus einzelnen, in Umfangsrichtung nebeneinander angeordneten Segmenten bestehen.

In nicht näher dargestellter Weise kann der Bremsenkörper 3 einen Bremsbelag aufweisen, während in dem Ausführungsbeispiel an dieser Stelle ein Spalt freigelassen ist. Dieser Spalt könnte mit einem Bremsbelag ausgefüllt sein, wenn die Bremsfläche beispielsweise als Arbeitsbremse oder dynamische Bremse verwendet werden soll.

In einem solchen Fall kann der Bremsbelag zwischen dem Außenring 7 und dem Innenring 8 bündig mit den der Ankerscheibe 12 zugewandten Stirnflächen des Außenrings 7 und des Innenrings 8 sein.

In Figur 1 ist dargestellt, dass die räumliche Anordnung des Permanentmagneten 4 in axialer Richtung zwischen der Ankerscheibe 12 und der Erregerspule 6 vorgesehen ist. Gleichzeitig erkennt man, dass dieser hülsenförmige oder aus Segmenten zusammengesetzte Permanentmagnet 4 dabei im radial äußeren Bereich der Erregerspule 6 oder ihres Gehäuses angeordnet ist, also einen größtmöglichen Durchmesser hat.

Diese direkte Anordnung des Permanentmagneten 4 in axialer Richtung zwischen der Ankerscheibe 12 und der Erregerspule 6 verbessert den Magnetfluß, weil dieser direkter erfolgen kann, was auch zu einer erhöhten Wiederanzugsspannung der Erregerspule 6 führt. Dadurch kann eine Verbesserung der Bremse 1 in ihrem Temperaturverhalten und beispielsweise ein Einsatz der Bremse 1 von - 40°C bis + 120°C ermöglicht werden.

Die vorstehend beschriebenen Merkmale und Maßnahmen erkennt man auch bei der Bremse 1 gemäß Fig. 2, die aber gleichzeitig als Doppelbremse ausgebildet ist. Auf der dem ersten Permanentmagneten 4 und der Ankerscheibe 12 in axialer Richtung abgewandten Seite der Erregerspule 6 ist nämlich ein zweiter Permanentmagnet 41 zwischen Außenring 7 und Innenring angeordnet, dessen radiale Querschnittsabmessung oder Querschnittsdicke d ebenfalls kleiner als seine axiale Abmessung ist. An dem der Erregerspule 6 abgewandten stirnseitigen Ende dieses zweiten Permanentmagneten 41 ist eine zweite Ankerscheibe 121 vorgesehen, die auf die selbe Welle wie die erste Ankerscheibe 12 wirkt. Somit ergibt sich eine Doppelbremse, bei welcher aber in vorteilhafter Weise nur ein einziger Elektromagnet 5 mit einem Stromanschluss benötigt wird. Entsprechend kurz ist die Gesamtbaulänge gegenüber zwei auf die selbe Welle wirkenden Bremsen.

In Fig. 2 erkannt man deutlich, dass der Außenring 7 die Erregerspule 6 nach zwei einander entgegengesetzten Seiten jeweils in axialer Richtung überragt und den ersten Permanentmagneten 4 und den zweiten Permanentmagneten 41 außenseitig umschließt. Die Innenseite des zweiten Permanentmagneten 41 liegt an einem zweiten Innenring 81 an, so dass der Außenpol des zweiten Permanentmagneten 41 von dem in axialer Richtung verlängerten Außenring 7 und der Innenpol von dem zweiten Innenring 81 gebildet sind.

Dabei hat der zweite Permanentmagnet 41 den selben Durchmesser und die selbe Querschnittsdicke d wie der erste Permanentmagnet 4 und fluchtet mit diesem ersten Permanentmagneten 4, wie es deutlich in Fig. 2 erkennbar ist. Auch die axiale Abmessung des zweiten Permanentmagneten 41 entspricht der des ersten Permanentmagneten 4.

In der oberen Hälfte der Fig. 2 sind die Magnetfelder bei geschlossener Bremse 1, also nicht bestromter Erregerspule 6 durch Pfeile Pf 1 schematisiert angedeutet, woraus sich ergibt, dass die beiden Permanentmagnete 4 und 41, wie schon früher erwähnt, radial magnetisiert sind, aber jeweils in umgekehrter oder entgegengesetzter Richtung.

In der unteren Hälfte der Fig. 2 ist das Magnetfeld bei geöffneter Bremse, also bestromter Erregerspule 6 durch Pfeile Pf 2 angedeutet. In diesem Falle sind die Permanentmagnetfelder der Permanentmagnete soweit kompensiert, neutralisiert, verdrängt oder umgelenkt, dass die Ankerscheiben 12 und 121 mittels Federkraft von den beidseits angeordneten Bremsenkörpern 3 abgehoben sind.

Im Ausführungsbeispiel nach Fig. 2 sind beide Permanentmagnete 4 und 41 sowie ihre Befestigungen und die mit ihnen zusammenwirkenden Teile, insbesondere die Ankerscheiben 12 und 121 und/oder die Federn 16 sowie die Bremsenkörper 3 spiegelsymmetrisch zu dem gemeinsamen Elektromagneten 5 oder zu seiner Erregerspule 6 angeordnet und im übrigen übereinstimmend ausgebildet. Somit ergibt sich Gleichheit beider Seiten dieser Doppelbremse, wodurch diese für Anwendungen mit erhöhten Sicherheitsanforderungen zum Beispiel für Personen- und Lastenaufzüge geeignet ist, da beide Seiten oder Hälften voneinander unabhängige und damit redundante Bremssysteme darstellen. Das Lüften dieser Doppelbremse gemäß der Andeutung in der unteren Hälfte der Fig. 2 ist nur einfach vorhanden, was aber ausreicht, da bei Ausfall der Erregung der sichere Bremszustand redundant erhalten bleibt.

Die elektromagnetische Bremse 1 für einen insbesondere elektrischen Antrieb weist einen Bremsenkörper 3 auf, der einen hülsenförmig ausgebildeten Permanentmagneten 4, einen mit einer Erregerspule 6 versehenen Elektromagneten 5, einen als Außenpol ausgebildeten Außenring 7 und einen als Innenpol ausgebildeten Innenring 8 umfasst, wobei eine drehfest mit einer Welle verbundene Ankerscheibe 12 mit dem Permanentmagneten 4 über einen Luftspalt einen magnetischen Kreis bildet und durch die Magnetkraft des Permanentmagneten 4 gegen die Kraft von Rückstellfedern 16 an den Bremsenkörper 3 beziehungsweise die Stirnflächen des Außenrings 7 und des Innenrings 8 anziehbar ist. Bei bestromter Erregerspule 6 wird das Permanentmagnetfeld des Permanentmagneten 4 soweit kompensiert, neutralisiert, verdrängt oder umgelenkt, dass die Ankerscheibe 12 mittels Federkraft von dem Bremsenkörper 3 abhebbar oder abgehoben und dadurch die Bremse 1 gelüftet ist. Die radiale Querschnittsabmessung oder Querschnittsdicke d des Permanentmagneten 4, also die Differenz zwischen seinem Innendurchmesser und seinem Außendurchmesser ist dabei kleiner, insbesondere erheblich kleiner, als seine axiale Abmessung und die räumliche Anordnung des Permanentmagneten 4 ist - in axialer Richtung gesehen - zwischen der Ankerscheibe 12 und der Erregerspule 6 und dabei im radial äußeren Bereich der Erregerspule 6 oder ihres Gehäuses vorgesehen.

Dabei kann die Bremse 1 auch dadurch als Doppelbremse ausgebildet sein, dass beidseits der Erregerspule 6 jeweils ein etwa hülsenförmiger oder manschettenförmiger Permanentmagnet 4 und eine damit zusammenwirkende Ankerscheibe 12 sowie die weiteren erforderlichen Teile einer solchen Bremse bevorzugt spiegelsymmetrisch angeordnet sind.

## Patentansprüche

1. Elektromagnetische Bremse (1) für einen insbesondere elektrischen Antrieb, mit wenigstens einem Bremsenkörper (3), der wenigstens einen Permanentmagneten (4), wenigstens einen Elektromagneten (5) mit einer elektromagnetischen Erregerspule (6), einen als Außenring (7) ausgebildeten Außenpol und einen als Innenring (8) ausgebildeten Innenpol aufweist, wobei der Bremsenkörper (3) drehfest insbesondere mit dem Ständer eines vorzugsweise elektrischen Antriebs verbunden ist, sowie mit einer Ankerscheibe (12), die mit der drehbaren Welle des Antriebs drehfest verbunden ist, wobei die Ankerscheibe (12) mit dem Außenpol und mit dem Innenpol sowie mit dem Permanentmagneten (4) über einen Luftspalt einen magnetischen Kreis bildet und wobei die Ankerscheibe (12) durch die Magnetkraft des Permanentmagneten (4) gegen die Kraft einer Feder (16) an den Bremsenkörper (3) anziehbar ist und der Elektromagnet (5) bei bestromter Erregerspule (6) das Permanentmagnetfeld des Permanentmagneten (4) zumindest soweit kompensiert, neutralisiert, verdrängt oder umlenkt, dass die Ankerscheibe (12) mittels Federkraft von dem Bremsenkörper (3) abhebbar oder abgehoben ist, **dadurch gekennzeichnet, dass** die radiale Querschnittsabmessung oder Querschnittsdicke (d) des die Bremskraft erzeugenden Permanentmagneten (4) zwischen seinem Innendurchmesser und seinem Außendurchmesser kleiner als seine axiale Abmessung ist und dass die räumliche Anordnung des Permanentmagneten (4) in axialer Richtung zwischen der Ankerscheibe (12) und der Erregerspule (6) vorgesehen ist.

2. Bremse nach Anspruch 1, **dadurch gekennzeichnet, dass** der Permanentmagnet (4) hülsenförmig oder manschettenförmig ausgebildet ist.

3. Bremse nach Anspruch 1 oder 2, **dadurch gekennzeichnet, dass** der Permanentmagnet (4) im radial äußeren Bereich der Erregerspule (6) oder ihres Gehäuses angeordnet ist.

4. Bremse nach einem der Ansprüche 1 bis 3, **dadurch gekennzeichnet, dass** der Permanentmagnet (4) hülsenförmig zwischen Außenring (7) und Innenring (8) des Bremsenkörpers (3) angeordnet und radial magnetisiert ist.

5. Bremse nach einem der Ansprüche 1 bis 4, **dadurch gekennzeichnet, dass** der lichte Abstand der beiden in radialer Richtung beidseits des Permanentmagneten (4) befindlichen, durch den Außenring (7) und den Innenring (8) gebildeten Pole wenigstens der radialen Querschnittsdicke (d) des Permanentmagneten (4) entspricht.

6. Bremse nach einem der Ansprüche 1 bis 5, **dadurch gekennzeichnet, dass** der Mindestabstand der Pole gegenüber der radialen Querschnittsdicke (d) des Permanentmagneten (4) vergrößert ist, so dass sich zwischen der Stirnseite des Permanentmagneten (4) und in diesem Abstand der Pole ein Freiraum ergibt.

7. Bremse nach einem der Ansprüche 1 bis 6, **dadurch gekennzeichnet, dass** der Abstand der Pole durch nicht magnetischen Werkstoff verschlossen oder ausgefüllt ist.

8. Bremse nach einem der Ansprüche 1 bis 7, **dadurch gekennzeichnet, dass** die axiale Abmessung des Permanentmagneten (4) seine radiale Querschnittsdicke (d) mehrfach, insbesondere um mehr als das Dreifache, insbesondere um etwa das Fünffache bis Fünfzehnfache, vorzugsweise etwa um das Zehnfache oder einen anderen Zwischenwert übertrifft.

9. Bremse nach einem der Ansprüche 1 bis 8, **dadurch gekennzeichnet, dass** zur Erzeugung der auf die Ankerscheibe (12) wirkenden Federkraft wenigstens eine Zugfeder (16) und/oder eine vorgespannte und vernietete oder verschraubte Segmentfeder, insbesondere mehrere am Umfang der konzentrisch zur Welle (13) angeordneten Ankerscheibe (12) angeordnete Zugfedern (16) und/oder Segmentfedern vorgesehen sind, die in einem der Ankerscheibe (12) in axialer Richtung bezüglich ihrer axialen Verstellbarkeit begrenzenden Flansch (15) angeordnet ist/sind, der auf der dem Permanentmagneten (4) abgewandten Seite der Ankerscheibe (12) gegenüber der Welle (13) radial hochsteht.

10. Bremse nach einem der Ansprüche 1 bis 9, **dadurch gekennzeichnet, dass** der die Zugfedern (16) oder als solche wirkenden Segmentfedern enthaltende Flansch (15) mit einer mit der Welle des Antriebs drehfest verbundenen Hülse (14) verbunden, insbesondere einstückig verbunden ist und die Ankerscheibe (12) auf der Außenseite dieser Hülse (14) drehfest, aber axial um den Luftspalt verstellbar angeordnet ist.

11. Bremse nach einem der Ansprüche 1 bis 10, **dadurch gekennzeichnet, dass** der hülsen- oder manschettenförmige Permanentmagnet (4) zwischen Außenring (7) und Innenring (8) **dadurch** fixiert ist, dass der Außenring (7) unter Zwischenlage des Permanentmagneten (4) mit dem Innenring (8) durch Schrumpfen verbunden ist.

12. Bremse nach einem der Ansprüche 1 bis 11, **dadurch gekennzeichnet, dass** der Permanentmagnet (4) aus einzelnen in Umfangsrichtung nebeneinander angeordneten Segmenten besteht.

13. Bremse nach einem der Ansprüche 1 bis 12, **dadurch gekennzeichnet, dass** der Bremsenkörper (3) einen Bremsbelag aufweist.

14. Bremse nach einem der Ansprüche 1 bis 13, **dadurch gekennzeichnet, dass** auf der dem ersten Permanentmagneten (4) und der Ankerscheibe (12) in axialer Richtung abgewandten Seite der Erregerspule (6) ein zweiter Permanentmagnet (41) zwischen Außenring (7) und Innenring angeordnet ist, dessen radiale Querschnittsabmessung oder Querschnittsdicke (d) insbesondere kleiner als seine axiale Abmessung ist, und dass an dem der Erregerspule (6) abgewandten stirnseitigen Ende dieses zweiten Permanentmagneten (41) eine zweite Ankerscheibe (121) vorgesehen ist, die auf die selbe Welle wie die erste Ankerscheibe (12) wirkt.

15. Bremse nach einem der Ansprüche 1 bis 14, **dadurch gekennzeichnet, dass** der Außenring (7) die Erregerspule (6) nach zwei einander entgegengesetzten Seiten in axialer Richtung überragt und den ersten Permanentmagneten (4) und den zweiten Permanentmagneten (41) außenseitig umschließt und dass die Innenseite des zweiten Permanentmagneten (41) an einem zweiten Innenring (81) anliegt, so dass der Außenpol des zweiten Permanentmagneten (41) von dem in axialer Richtung verlängerten Außenring (7) und der Innenpol von dem zweiten Innenring (81) gebildet sind.

16. Bremse nach einem der Ansprüche 1 bis 15, **dadurch gekennzeichnet, dass** der zweite Permanentmagnet (41) den selben Durchmesser und die selbe Querschnittsdicke (d) wie der erste Permanentmagnet (4) hat und mit dem ersten Permanentmagneten (4) fluchtet.

17. Bremse nach einem der Ansprüche 1 bis 16, **dadurch gekennzeichnet, dass** die axiale Abmessung des zweiten Permanentmagneten (41) der des ersten Permanentmagneten (4) entspricht.

18. Bremse nach einem der vorstehenden Ansprüche, **dadurch gekennzeichnet, dass** beide Permanentmagnete (4, 41) sowie ihre Befestigungen und die mit ihnen zusammenwirkenden Teile, insbesondere die Ankerscheiben (12, 121) und/oder die Federn (16) spiegelsymmetrisch zu dem gemeinsamen Elektromagneten (5) oder seiner Erregerspule (6) angeordnet und im übrigen übereinstimmend ausgebildet sind.

## Claims

1. Electromagnetic brake (1) for an, in particular, electric drive, having at least one brake member (3) that comprises at least one permanent magnet (4), at least one electromagnet (5) with an electromagnetic field coil (6), an external pole configured as an outer ring (7) and an internal pole configured as an inner ring (8), the brake member (3) being connected for rotation in particular with the stator of a preferably electric drive, and with an armature disc (12) which is connected for rotation with the rotatable shaft of the drive, wherein the armature disc (12) forms a magnetic circuit with the external pole and with the internal pole and with the permanent magnet (4) via an air gap, and the armature disc (12) is adapted to be attracted to the brake member (3) by the magnetic force of the permanent magnet (4) counter to the force of a spring (16), and when current is flowing through the field coil (6) the electromagnet (5) compensates, neutralises, displaces or deflects the permanent magnetic field of the permanent magnet (4) at least to the point where the armature disc (12) can be lifted or is lifted away from the brake member (3) by spring force, **characterised in that** the radial cross-sectional dimension or cross-sectional thickness (d), between its internal diameter and its external diameter, of the permanent magnet (4) that generates the braking force is smaller than its axial dimension and **in that** the permanent magnet (4) is arranged spatially in the axial direction between the armature disc (12) and the field coil (6).

2. Brake according to claim 1, **characterised in that** the permanent magnet (4) is shaped like a socket or sleeve.

3. Brake according to claim 1 or 2, **characterised in that** the permanent magnet (4) is arranged in the radially outer region of the field coil (6) or its housing.

4. Brake according to one of claims 1 to 3, **characterised in that** the permanent magnet (4) is arranged in a sleeve shape between the outer ring (7) and inner ring (8) of the brake member (3) and is radially magnetised.

5. Brake according to one of claims 1 to 4, **characterised in that** the internal spacing of the two poles formed by the outer ring (7) and inner ring (8) and located on both sides of the permanent magnet (4) in the radial direction corresponds at least to the radial cross-sectional thickness (d) of the permanent magnet (4).

6. Brake according to one of claims 1 to 5, **characterised in that** the minimum spacing of the poles is enlarged relative to the radial cross-sectional thickness (d) of the permanent magnet (4), so that a free space is formed between the end face of the permanent magnet (4) and in this gap between the poles.

7. Brake according to one of claims 1 to 6, **characterised in that** the gap between the poles is closed off or filled by non-magnetic material.

8. Brake according to one of claims 1 to 7, **characterised in that** the axial dimension of the permanent magnet (4) is several times greater than its radial cross-sectional thickness (d), particularly more than three times, particularly about five times to fifteen times, preferably about ten times or some other intermediate value.

9. Brake according to one of claims 1 to 8, **characterised in that** in order to generate the spring force acting on the armature disc (12), at least one tension spring (16) and/or a biased and riveted or screwed segmental spring, particularly a plurality of tension springs (16) arranged around the circumference of the armature disc (12) disposed concentrically with respect to the shaft (13), and/or segmental springs, are provided, which is/are arranged in a flange (15) that limits the axial mobility of the armature disc (12) in the axial direction, said flange protruding radially from the shaft (13) on the side of the armature disc (12) remote from the permanent magnet (4).

10. Brake according to one of claims 1 to 9, **characterised in that** the flange (15) containing the tension springs (16) or segmental springs acting as such is connected, particularly integrally connected, to a sleeve (14) that is connected for rotation with the shaft of the drive, and the armature disc (12) is mounted on the outside of this sleeve (14) so as to be connected for rotation therewith but axially adjustable about the air gap.

11. Brake according to one of claims 1 to 10, **characterised in that** the sleeve- or socket-shaped permanent magnet (4) is fixed between the outer ring (7) and inner ring (8) by the fact that the outer ring (7) is attached to the inner ring (8) by shrinking, with the permanent magnet (4) placed in between.

12. Brake according to one of claims 1 to 11, **characterised in that** the permanent magnet (4) consists of individual segments arranged next to one another in the circumferential direction.

13. Brake according to one of claims 1 to 12, **characterised in that** the brake member (3) has a brake lining.

14. Brake according to one of claims 1 to 13, **characterised in that** on the side of the field coil (6) remote from the first permanent magnet (4) and the armature disc (12) in the axial direction, a second permanent magnet (41) is arranged between the outer ring (7) and inner ring, the radial cross-sectional dimension or cross-sectional thickness (d) of which is, in particular, smaller than its axial dimension, and **in that** on the end face of this second permanent magnet (41) remote from the field coil (6) is provided a second armature disc (121) that acts on the same shaft as the first armature disc (12).

15. Brake according to one of claims 1 to 14, **characterised in that** the outer ring (7) projects axially beyond the field coil (6) on two opposite sides and externally surrounds the first permanent magnet (4) and the second permanent magnet (41) and **in that** the inside of the second permanent magnet (41) abuts on a second inner ring (81), so that the external pole of the second permanent magnet (41) is formed by the axially extended outer ring (7) and the internal pole is formed by the second inner ring (81).

16. Brake according to one of claims 1 to 15, **characterised in that** the second permanent magnet (41) has the same diameter and the same cross-sectional thickness (d) as the first permanent magnet (4) and is aligned with the first permanent magnet (4).

17. Brake according to one of claims 1 to 16, **characterised in that** the axial dimension of the second permanent magnet (41) corresponds to that of the first permanent magnet (4).

18. Brake according to one of the preceding claims, **characterised in that** the two permanent magnets (4, 41) and their fixings and the parts that cooperate with them, particularly the armature discs (12, 121) and/or the springs (16) are arranged mirror-symmetrically to the common electromagnet (5) or its field coil (6) and are also of similar construction.

## Revendications

1. Frein électromagnétique (1) pour un entraînement en particulier électrique, avec au moins un corps de frein (3), qui présente au moins un aimant permanent (4), au moins un électroaimant (5) avec une bobine d'excitation électromagnétique (6), un pôle extérieur réalisé sous la forme d'une bague extérieure (7) et un pôle intérieur réalisé sous la forme d'une bague intérieure (8), le corps de frein (3) étant relié de manière solidaire en rotation en particulier au support d'un entraînement de préférence électrique ainsi qu'à un disque d'induit (12), qui est relié de manière solidaire en rotation à l'axe rotatif de l'entraînement, le disque d'induit (12) formant un circuit magnétique avec le pôle extérieur et avec le pôle intérieur ainsi qu'avec l'aimant permanent (4) par le biais d'un entrefer, et le disque d'induit (12) pouvant être attiré sur le corps de frein (3) par la force magnétique de l'aimant permanent (4) contre la tension d'un ressort (16), et l'électroaimant (5), lorsque la bobine d'excitation (6) est parcourue par un courant, compensant, neutralisant, supplantant ou déviant le champ d'aimant permanent de l'aimant permanent (4) au moins autant que le disque d'induit (12) puisse être décollé ou soit décollé du corps de frein (3) au moyen de la tension de ressort, **caractérisé en ce que** la dimension en coupe transversale radiale ou l'épaisseur en coupe transversale (d) de l'aimant permanent (4) générant la force de freinage entre son diamètre intérieur et son diamètre extérieur est plus petite que sa dimension axiale et **en ce que** l'agencement spatial de l'aimant permanent (4) est prévu dans la direction axiale entre le disque d'induit (12) et la bobine d'excitation (6).

2. Frein selon la revendication 1, **caractérisé en ce que** l'aimant permanent (4) est réalisé sous la forme d'une douille ou d'un manchon.

3. Frein selon la revendication 1 ou 2, **caractérisé en ce que** l'aimant permanent (4) est disposé dans la zone radiale externe de la bobine d'excitation (6) ou du boîtier de celle-ci.

4. Frein selon l'une quelconque des revendications 1 à 3, **caractérisé en ce que** l'aimant permanent (4) est disposé en forme de douille entre la bague extérieure (7) et la bague intérieure (8) du corps de frein (3) et est magnétisé de manière radiale.

5. Frein selon l'une quelconque des revendications 1 à 4, **caractérisé en ce que** l'écart intérieur des deux pôles se trouvant dans la direction radiale des deux côtés de l'aimant permanent (4), formé par la bague extérieure (7) et la bague intérieure (8) correspond au moins à l'épaisseur en coupe transversale radiale (d) de l'aimant permanent (4).

6. Frein selon l'une quelconque des revendications 1 à 5, **caractérisé en ce que** l'écart minimal des pôles par rapport à l'épaisseur en coupe transversale radiale (d) de l'aimant permanent (4) est agrandi de sorte qu'il en résulte un espace libre entre la face frontale de l'aimant permanent (4) et cet écart des pôles.

7. Frein selon l'une quelconque des revendications 1 à 6, **caractérisé en ce que** l'écart des pôles est fermé ou rempli par un matériau non magnétique.

8. Frein selon l'une quelconque des revendications 1 à 7, **caractérisé en ce que** la dimension axiale de l'aimant permanent (4) surpasse de plusieurs fois son épaisseur en coupe transversale radiale (d), en particulier de plus de trois fois, en particulier d'environ cinq à quinze fois, de préférence d'environ dix fois ou d'une autre valeur intermédiaire.

9. Frein selon l'une quelconque des revendications 1 à 8, **caractérisé en ce que**, pour générer la tension de ressort agissant sur le disque d'induit (12), il est prévu au moins un ressort de traction (16) et/ou un ressort à segments prétendu et riveté ou vissé, en particulier plusieurs ressorts de traction (16) et/ou ressorts à segments disposés à la circonférence du disque d'induit (12) disposé de manière concentrique à l'axe (13), lequel ressort ou lesquels ressorts est/sont disposé(s) dans une bride (15) limitant le disque d'induit (12) dans la direction axiale en ce qui concerne sa possibilité d'ajustage axial, laquelle bride est en position surélevée de manière radiale sur le côté, opposé à l'aimant permanent (4), du disque d'induit (12) par rapport à l'axe (13).

10. Frein selon l'une quelconque des revendications 1 à 9, **caractérisé en ce que** la bride (15) contenant les ressorts de traction (16) ou les ressorts à segments agissant en tant que tels est reliée à une douille (14) reliée de manière solidaire en rotation en particulier sous forme de pièce unique à l'axe de l'entraînement et le disque d'induit (12) est disposé de manière solidaire en rotation sur le côté extérieur de cette douille (14), mais ajustable de manière axiale autour de l'entrefer.

11. Frein selon l'une quelconque des revendications 1 à 10, **caractérisé en ce que** l'aimant permanent (4) en forme de douille ou de manchon est fixé entre la bague extérieure (7) et la bague intérieure (8) par le fait que la bague extérieure (7) est reliée par rétrécissement à la bague intérieure (8) avec intercalation de l'aimant permanent (4).

12. Frein selon l'une quelconque des revendications 1 à 11, **caractérisé en ce que** l'aimant permanent (4) se compose de différents segments individuels disposés les uns à côté des autres dans la direction de la circonférence.

13. Frein selon l'une quelconque des revendications 1 à 12, **caractérisé en ce que** le corps de frein (3) présente une garniture de frein.

14. Frein selon l'une quelconque des revendications 1 à 13, **caractérisé en ce que** sur le côté de la bobine d'excitation (6) opposé en direction axiale au premier aimant permanent (4) et au disque d'induit (12) est disposé un deuxième aimant permanent (41) entre la bague extérieure (7) et la bague intérieure, dont la dimension en coupe transversale radiale ou l'épaisseur en coupe transversale (d) est en particulier plus petite que sa dimension axiale, et **en ce qu'**il est prévu à l'extrémité faciale, opposée à la bobine d'excitation (6), de ce deuxième aimant permanent (41) un deuxième disque d'induit (121) qui agit sur le même axe que le premier disque d'induit (12).

15. Frein selon l'une quelconque des revendications 1 à 14, **caractérisé en ce que** la bague extérieure (7) dépasse de la bobine d'excitation (6) dans la direction axiale de deux côtés opposés l'un à l'autre et englobe extérieurement le premier aimant permanent (4) et le deuxième aimant permanent (41) et **en ce que** le côté interne du deuxième aimant permanent (41) repose contre une deuxième bague intérieure (81) de sorte que le pôle extérieur du deuxième aimant permanent (41) soit formé par la bague extérieure (7) allongée dans la direction axiale et que le pôle intérieur soit formé par la deuxième bague intérieure (81).

16. Frein selon l'une quelconque des revendications 1 à 15, **caractérisé en ce que** le deuxième aimant permanent (41) a le même diamètre et la même épaisseur en coupe transversale (d) que le premier aimant permanent (4) et est aligné avec le premier aimant permanent (4).

17. Frein selon l'une quelconque des revendications 1 à 16, **caractérisé en ce que** la dimension axiale du deuxième aimant permanent (41) correspond à celle du premier aimant permanent (4).

18. Frein selon l'une quelconque des revendications précédentes, **caractérisé en ce que** les deux aimants permanents (4, 41) ainsi que leurs fixations et les pièces interagissant avec eux, en particulier les disques d'induit (12, 121) et/ou les ressorts (16) sont disposés de manière symétrique inversée par rapport à l'électroaimant commun (5) ou à sa bobine d'excitation (6) et sont formés par ailleurs de manière correspondante.
